# EUROPEAN PATENT APPLICATION

(11) **EP 2 573 455 A2**
(43) Date of publication of application: **27.03.2013**
(21) Application number: 12184120.9
(22) Date of filing: 12.09.2012
(51) Int. Cl.: F21S 8/04, F21V 21/108, F21S 6/00, G02B 6/00, F21V 8/00, F21Y 101/02

(54) **Lamp with asymmetric luminous intensity**

(30) Priority: 22.09.2011 TW 100217812 U
(71) Applicant: Flos S.P.A., 25073 Bovezzo (Brescia) (IT)
(72) Inventor: Chun Min, Ko, I-25073 Bovezzo, BRESCIA (TW); Yuh Sheng, Lin, I-25073 Bovezzo, BRESCIA (TW)
(74) Representative: Pulieri, Gianluca Antonio

(57) **Abstract**

A lamp (1') with asymmetric luminous intensity comprises a light guide (12), a light-emitting diode (LED) assembly (10) emitting light toward only one side of the light guide (12) and a reflective portion (14). A plurality of miniature structures (18) with different intervals is distributed over the first surface (2) of the light guide (12), the miniature structures dispersing the light asymmetrically to provide a more niform illumination on a surface. The lamp can be a desk lamp, a table light, a wall lamp, a crosspiece light or a hidden lamp. A flexible diffusion sheet (16) may also be used.

## Description

### BACKGROUND OF THE INVENTION

### Field of the Invention

The invention relates to a lamp with asymmetric luminous intensity, and more particularly to a lamp that can enhance effective illumination. For example, the invention relates to a desk lamp.

### Description of the Related Art

The following described vertical angle is referred to as an included angle of a measured direction with respect to a horizontal plane. For example, the vertical angle right beneath a lamp is 0°, and the vertical angle is 30° when the measured direction is deflected by 30°.

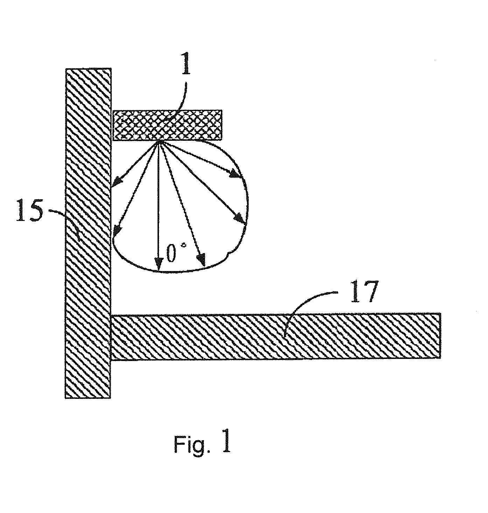

FIG. 1 is a schematic view showing a conventional lamp 1 employed in a crosspiece lighting device. The crosspiece lighting device comprises the lamp 1, a wall 15, and a work face 17. As shown by a luminous curve of FIG. 1, the lamp 1 ineffectively emits light onto the wall 15 and does not effectively emits light onto the work face 17, thereby resulting in a poor illumination efficiency. Furthermore, as shown by the luminous curve of FIG. 1, a maximal luminous intensity generated by the lamp 1 is located at the vertical angle 0° while the other luminous intensity generated by the lamp 1 decreases progressively when deflection of the vertical angle is increased. Accordingly, as the light leftward output by the lamp 1 is ineffectively emitted onto the wall 15 and the amount of the light rightward output by the lamp 1 decreases progressively with increase of the deflection of the vertical angle, distribution of the luminous intensity emitted onto the work face 17 is uneven.

### BRIEF SUMMARY OF THE INVENTION

A detailed description is given in the following embodiments with reference to the accompanying drawings.

An object of the invention is to provide a lamp with asymmetric luminous intensity, effectively and collectively outputting light toward a single side, forming an asymmetrical luminous curve, and further enhancing effective illumination. Thus, the present lamp is extremely suitable for illumination for an asymmetrical space. For example, the present lamp may serve as a hidden lamp, a desk lamp, a table light, a wall lamp, etc.

An exemplary embodiment of the invention provides a lamp with asymmetric luminous intensity, comprising a light guide, a light-emitting diode assembly, and a reflective portion. The light-emitting diode assembly emits light toward one side of the light guide. The reflective portion reflects part of the light output via the light guide to the exterior of the lamp. The light guide comprises a first surface and a second surface opposite to the first surface. The first surface directly faces the reflective portion. A plurality of miniature structures with different intervals is distributed over the first surface. The miniature structures disperse the light to form a luminous intensity of the lamp with respect to a vertical angle 0°, form the luminous intensity corresponding to a first specific vertical angle range toward one side of the vertical angle 0°, and form the luminous intensity corresponding to a second specific vertical angle range toward the other side of the vertical angle 0°. The luminous intensity corresponding to the first specific vertical angle range and the luminous intensity corresponding to the second specific vertical angle range are asymmetrically distributed.

The light-emitting diode assembly comprises at least one LED.

The luminous intensity corresponding to the first specific vertical angle range is higher than that corresponding to the second specific vertical angle range.

The luminous intensity corresponding to the first specific vertical angle range is increased with increase of a deflection angle within the first specific vertical angle range. The luminous intensity corresponding to the first specific vertical angle range decreases progressively with increase of a deflection angle within the second specific vertical angle range.

The distributed interval proximate to part of the miniature structures of the two opposite sides of the first surface exceeds the distributed interval of the other miniature structures located in the middle of the first surface.

The miniature structures are curved.

The maximal luminous intensity generated by the lamp is distributed between 30° and 60° within the first specific vertical angle range.

The lamp further comprises a diffusion sheet directly facing the second surface of the light guide and adjusting an angle of the light emitted via the second surface, forming an asymmetrical luminous curve.

The maximal luminous intensity generated by the lamp is distributed between 20° and 45° within the first specific vertical angle range.

### BRIEF DESCRIPTION OF the DRAWINGS

The invention can be more fully understood by reading the subsequent detailed description and examples with references made to the accompanying drawings, wherein:

FIG. 1 is a schematic view showing a conventional lamp employed in a crosspiece lighting device;

FIG. 2 is a schematic view of a lamp, with asymmetric luminous intensity, of a first embodiment of the invention;

FIG. 3 is a schematic view of a lamp, with asymmetric luminous intensity, of a second embodiment of the invention;

FIG. 4 is a schematic view showing a luminous curve of the lamp, employed in a crosspiece lighting device, of the first embodiment of the invention;

FIG. 5 is a schematic view showing the lamp, with the asymmetrical luminous curve, employed as a crosspiece lighting device;

FIG. 6a is an experimental diagram showing an actual luminous curve of the lamp of the first embodiment of the invention; and

FIG. 6b is an experimental diagram showing an actual luminous curve of the lamp of the second embodiment of the invention.

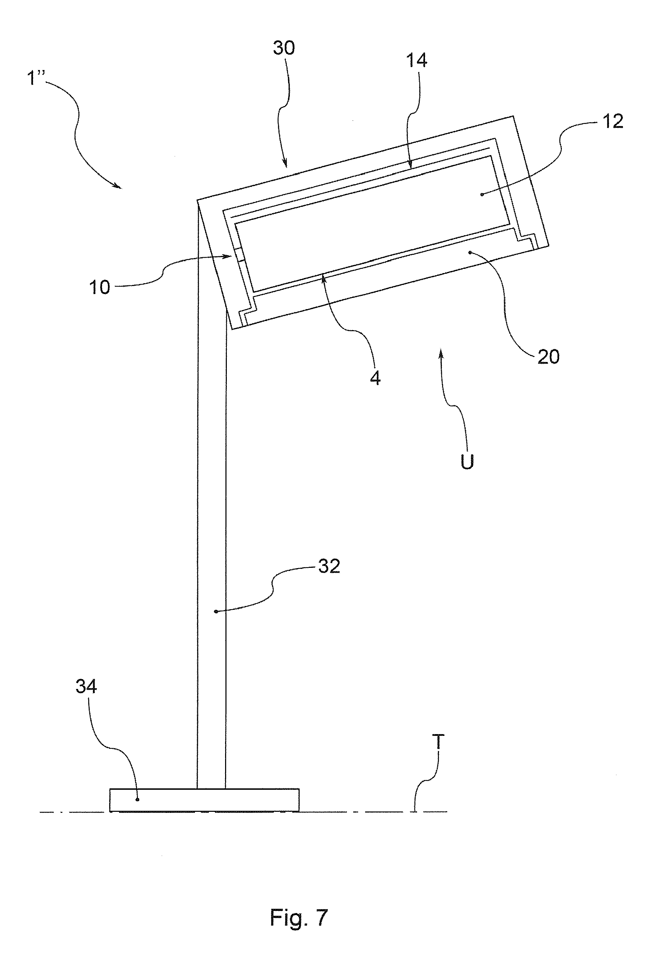

Fig. 7 discloses a further embodiment of the invention, wherein the lamp is a desk lamp.

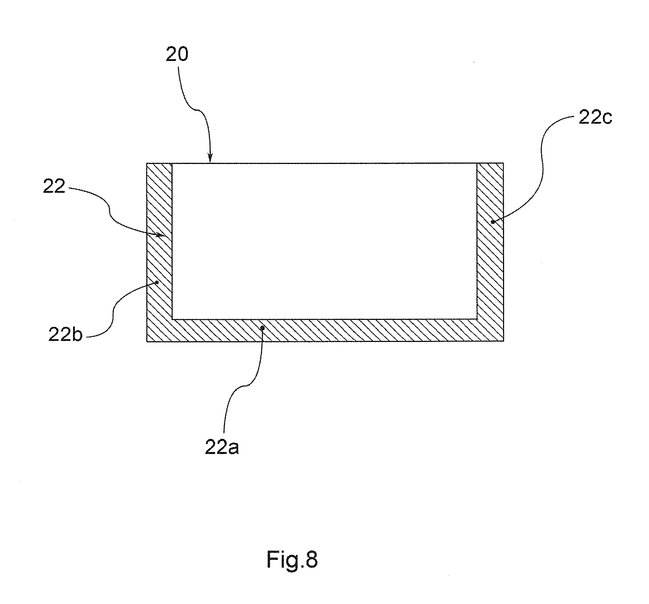

Fig. 8 is a view of the embodiment of Fig. 7, according to the observation direction U in Fig. 7.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

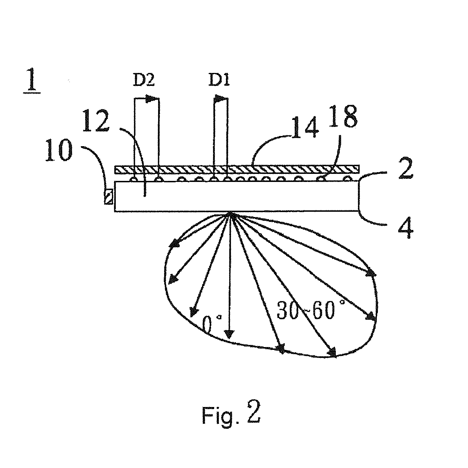

FIG. 2 is a schematic view of a lamp 1, with asymmetric luminous intensity, of a first embodiment of the invention. The lamp 1 comprises a light-emitting diode (LED) assembly 10, a light guide 12, and a reflective portion 14.

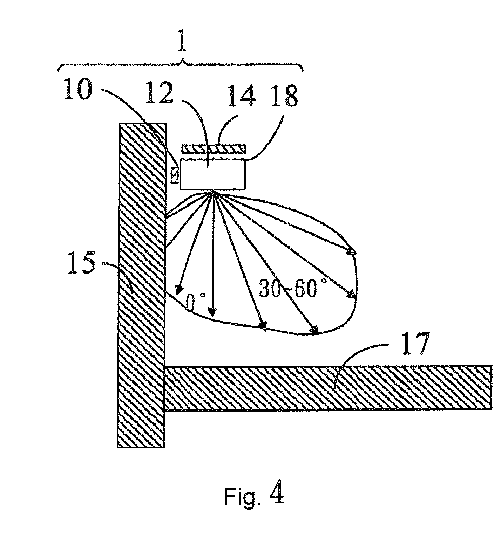

The LED assembly 10 is disposed on one of two opposite sides of the light guide 12 and may have at least one or more than one LED. Each LED has a light-emitting face emitting light toward the other side of the light guide 12. As shown in FIG. 4, the lamp 1 is employed in a crosspiece light. Here, disposition of the LED assembly 10 is restricted by the structure of the crosspiece light. In principle, the LED assembly 10 is disposed on one side, proximate to a wall 15, of the light guide 12. The light-emitting face of the LED assembly 10 emits light into the light guide 12 via one side thereof. As shown in FIG. 4, the LED assembly 10 is disposed near the left side of the light guide 12, such that a luminous curve from the LED assembly 10 is concentrated rightward. Thus, the light ineffectively emitting onto the wall 15 can be reduced and uniformity of the light emitting onto a work face 17 is enhanced.

As shown in FIG. 2, the light guide 12 comprises a first surface 2 and a second surface 4 opposite to the first surface 2. The first surface 2 directly faces the reflective portion 14 and a plurality of curved miniature structures 18 with different intervals is distributed over the first surface 2. As shown in FIG. 2, the curved miniature structures 18 are dispersed at two ends of the first surface 2 (with an interval D2) and are concentrated at the middle of the first surface 2 (with an interval D1). As D2 exceeds D1, the refraction angle of the light transmitted from the reflective portion 14 can be changed, thereby enabling the light to be refracted out of the second surface 4 of the light guide 12 with a greater deflected refraction angle. In other embodiments, the miniature structures 18 may be directly formed on or disposed on the first surface 2 by multiple semi-circular or concave-convex structures.

The reflective portion 14 has a reflective surface facing the first surface 2 of the light guide 12; preferably, the reflective surface of the reflective portion 14 is metallized.

The reflective portion 14 may be an independent reflective plate or part of a casing (not shown) of the lamp 1. The reflective portion 14 can transmit the light output by the light guide 12 to the exterior of the lamp 1.

Referring to a first embodiment shown by FIG. 2, as the LED assembly 10 is disposed on the left side of the light guide 12, the miniature structures 18 of the lamp 1 can disperse the light entering the light guide 12, forming the luminous intensity with respect to the vertical angle 0° of the lamp 1. The corresponding luminous intensity is increased with increase of the vertical angle deflected rightward, until the vertical angle is deflected in a specific deflection angle. Thus, a maximal luminous intensity corresponding to the first specific vertical angle range is formed at the right side of the vertical angle 0°. Additionally, the luminous intensity decreases progressively with the increase of a deflection angle within a second specific vertical angle range, until the vertical angle 0° is deflected leftward to another specific deflection angle. Thus, the maximal luminous intensity corresponding to the second specific vertical angle range is formed on the left side of the vertical angle 0°, wherein the maximal luminous intensity corresponding to the first specific vertical angle range exceeds that corresponding to the second specific vertical angle range, thereby forming the luminous curve shown in FIG. 2. Accordingly, an asymmetrical luminous curve is formed to guide most of the light to deflect rightward. Namely, a maximal luminous intensity is generated at the right side between the vertical angle 30° and the vertical angle 60° (within the first specific vertical angle range), while only a minor part of the light is emitted toward the wall 15 (as shown in FIG. 4).

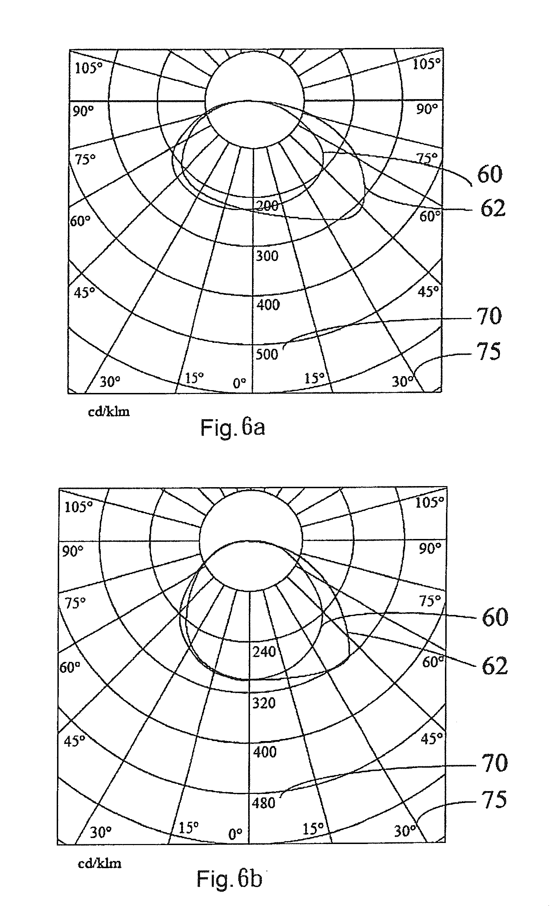

FIG. 6a is an experimental diagram showing an actual luminous curve 62 of a first embodiment of the invention, wherein the central longitudinal axis is referred to as luminous intensity/thousand luminous flux (cd/klm), the numeral 75 represents the vertical angle at which the light is emitted, and the numeral 60 represents the luminous curve of a horizontal angle. Here, based on the vertical angle 0° and the luminous intensity generated by the lamp 1, the maximal luminous intensity generated on the right side of the vertical angle 0° is from 250 to 310 cd/klm and is approximately distributed in the range between the vertical angle 30° and the vertical angle 60° (within the first specific vertical angle range). On the other hand, the maximal luminous intensity generated on the left side of the vertical angle 0° is slightly greater than 200 cd/klm and is approximately distributed in the range between the vertical angle 15° and the vertical angle 58° (within the second specific vertical angle range). Thus, according to FIG. 6a, the luminous curve 62 of the first embodiment forms an asymmetrical luminous curve and the illumination provided by the asymmetrical luminous curve is more uniform as compared to the illumination provided by the conventional luminous curve. Moreover, the ineffective illumination, generated on the wall 15, provided by the asymmetrical luminous curve is significantly reduced as compared to the illumination provided by the conventional luminous curve.

Preferably, the miniature structures 18 are small recesses, for example micro recesses, obtained on the first surface 2 preferably by means of a calendering of the first surface 2. Preferably, the calendering cylinder acting on the first surface 2 is superficially worked by laser incision, so that surface roughness is mild enough to obtain a uniform luminous intensity.

Moreover, the structures on the first surface can be obtained by injection moulding.

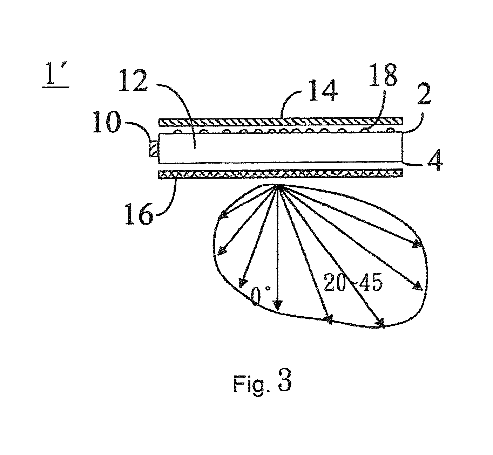

FIG. 3 is a schematic view of a lamp 1', with asymmetric luminous intensity, of a second embodiment of the invention. As compared with the first embodiment shown in FIG. 2, the lamp 1' of the second embodiment further comprises a diffusion sheet 16, preferably flexible, directly facing the second surface 4 of the light guide 12. The diffusion sheet 16 can adjust an angle of the light emitted via the second surface 4 to reduce the aforementioned light angle, thereby forming a more uniform plane light source. As shown in FIG. 3, the lamp 1' of the second embodiment forms an asymmetrical luminous curve to guide most of the light to deflect rightward. Namely, a maximal luminous intensity is generated at the right side between the vertical angle 20° and the vertical angle 45° (within the first specific vertical angle range), while only a minor part of the light is emitted toward the wall 15 (as shown in FIG. 4). Thus, the efficiency of luminous distribution is enhanced. Structure, disposition, and function of other elements in the lamp 1' of this embodiment are the same as those in the lamp 1 of the first embodiment, and explanation thereof is omitted for simplicity.

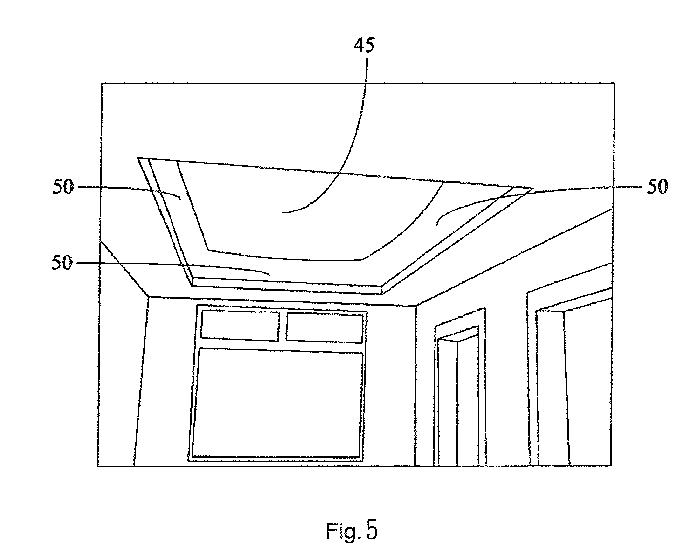

FIG. 6b is an experimental diagram showing an actual luminous curve 62 of the lamp 1' of the second embodiment of the invention, wherein the luminous curve 62 of the lamp 1' is also an asymmetrical luminous curve. A maximal luminous intensity is generated at the right side between the vertical angle 20° and the vertical angle 45° (within the first specific vertical angle range). On the contrary, a maximal luminous intensity is generated at the left side between the vertical angle 15° and the vertical angle 45° (within the first specific vertical angle range). FIG. 5 is a schematic view showing the lamp, with the asymmetrical luminous curve, employed as a crosspiece lighting device. As shown in FIG. 5, although the crosspiece lighting device is disposed near a surrounding area 50 around an indoor middle area 45, most of the light emitted from the crosspiece lighting device is guided toward the indoor middle area 45 and is then output by the indoor middle area 45. Thus, the crosspiece lighting device according to the invention can provide enhanced and effective illumination, as compared to the crosspiece lighting device of the prior art. Accordingly, based on disposition of the unilateral light source, i.e. the light-emitting diode (LED) assembly, the luminous curve can be adjusted to the asymmetrical luminous curve, allowing the light to be projected to any required position, and further achieving uniform illumination for a space which needs illumination. Moreover, the disclosed lamp is suitable for a hidden lamp, a desk lamp, a crosspiece light, a wall lamp, etc.

According to a further embodiment, the lamp 1" comprises a rigid plate 20 facing the second surface 4 of the light guide 12. The plate 20 is transparent to the emitting light other than in a peripheral region 22, for example U-shaped, suitable to prevent blindness due to direct light emitted by the LED assembly 10.

The peripheral region 22 comprises a main band 22a covering the LED assembly 10 and lateral bands 22b, 22c, extending laterally from the main band 22a.

Moreover, preferably, the lamp 1" comprises a casing 30 which houses the reflective portion 14, the light guide 12 and the plate 20.

Preferably, the casing 30 is supported by a stem 32, extending from a base 34, so that the lamp rests on a reference plane T, for example the horizontal plane of the desk.

Preferably, a perpendicular direction P, perpendicular to the second surface 4 of the light guide 12, is incident to the reference plane T, for example forming an angle between 65° - 85°, preferably equal to 75°.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A lamp (1,1',1") with asymmetric luminous intensity, comprising:
- a light guide (12) having a first surface (2) and a second surface (4) opposite to the first surface (2) and sides between them;
- a light-emitting diode assembly (10) emitting light toward only one side of the light guide (12); and
- a reflective portion (14) reflecting at least part of the light output via the light guide to the exterior of the lamp, the first surface (2) of the light guide (12) facing the reflective portion (14), wherein a plurality of miniature structures (18) with different intervals is distributed over the first surface (2) of the light guide (12), the miniature structures dispersing the light asymmetrically.

2. A lamp according to claim 1, wherein the distributed interval proximate to part of the miniature structures (18) of the two opposite sides of the first surface (2) exceeds the distributed interval of the other miniature structures located in the middle of the first surface (2).

3. A lamp according to claim 1 or 2, wherein the reflective portion (14) has a reflective surface facing the first surface (2) of the light guide (12) wherein said reflective surface is metallized.

4. A lamp according to any one of the preceding claims, wherein the miniature structures (18) are small recesses.

5. A lamp according to claim 4, wherein the recesses are obtained on the first surface (2) by means of a calendering of the first surface (2) by a calendering cylinder superficially worked by laser incision.

6. A lamp according to any one of the preceding claims, comprising a rigid plate (20) facing the second surface (4) of the light guide (12), the plate 20 being transparent to the emitting light other than in a peripheral region (22) suitable to prevent blindness due to direct light emitted by the LED assembly (10).

7. A lamp according to claim 6, comprising a casing (30) which houses the reflective portion (14), the light guide (12) and the plate (20).

8. A lamp according to any one of the preceding claims, suitable to rest on a desk surface having a reference plane (T), wherein a perpendicular direction (P), perpendicular to the second surface (4) of the light guide (12), is incident to the reference plane (T).

9. A lamp according to any one of the preceding claims, wherein the light-emitting diode assembly (10) comprises at least one LED.
